# EUROPÄISCHE PATENTSCHRIFT

(11) **EP 3 498 783 B1**
(45) Veröffentlichungstag und Bekanntmachung des Hinweises auf die Patenterteilung: **17.02.2021**
(21) Anmeldenummer: 17207206.8
(22) Anmeldetag: 14.12.2017
(51) Int. Cl.: C09D 5/00

(54) **DACHSTEIN MIT EINER BESCHICHTUNG UND VERFAHREN ZUR BESCHICHTUNG EINES DACHSTEINS**
ROOF TILE WITH A COATING AND METHOD FOR COATING A ROOF TILE
TUILE DOTÉE D'UN REVÊTEMENT ET PROCÉDÉ D'APPLICATION DE REVÊTEMENT SUR UNE TUILE

(43) Veröffentlichungstag der Anmeldung: 19.06.2019
(73) Patentinhaber: Monier Roofing GmbH, 61440 Oberursel (DE)
(72) Erfinder: Drechsler, Andreas, 64850 Schaafheim (DE)
(74) Vertreter: Patentanwälte Olbricht Buchhold Keulertz

(56) Entgegenhaltungen:
- EP-A1- 3 219 764
- WO-A1-2006/048108
- WO-A1-2009/048515
- WO-A2-2008/057878
- WO-A2-2009/064282

## Beschreibung

Die Erfindung betrifft einen Dachstein mit einer Beschichtung gemäß dem Oberbegriff von Anspruch 1 sowie ein Verfahren zur Beschichtung eines Dachsteins.

Auch wenn Dachsteine bereits ohne Beschichtung ihre Funktion als Dacheindeckungsmaterial erfüllen, wird zur Verbesserung der Beständigkeit und Haltbarkeit sowie aus ästhetischen Gründen die Mehrzahl an Dachsteinen mit einer Farbbeschichtung versehen.

Bei der üblicherweise überlappenden Verlegung der Dachsteine verbleibt zwischen den Dachsteinen ein Spalt, durch den bei Regen, insbesondere bedingt durch eine Kapillarwirkung der meist rauen Dachsteinoberfläche, Wasser eindringen kann. Dadurch ergeben sich im Wesentlichen zwei Probleme. Zum einen schädigt die eindringende Feuchtigkeit den Dachstuhl, zum anderen bietet die Feuchtigkeit eine Grundlage zur Ansiedelung von Mikroorganismen wie Algen, Moose und Flechten.

Ein dauerhaft durchfeuchteter Dachstein wird ausgewaschen, verliert Substanz und raut zunehmend auf. Die dadurch vergrößerte Kontaktfläche erhöht zusätzlich die Anfälligkeit des Dachsteins gegenüber einer Ansiedelung von Mikroorganismen und Staub- bzw. Schmutzpartikeln. Das ästhetische Äußere des Dachsteins wird beeinträchtigt. Zusammenfassend wird dies als Anschmutzneigung bezeichnet.

Ein weiteres daraus resultierendes Problem bei Betondachsteinen, sind Ausblühungen aus Calciumcarbonat. Ausblühungen entstehen bereits bei der Abbindung des Zements vor der Fertigung des Dachsteinrohlings und werden in der Regel in den ersten 3 Jahren nach Herstellung der Dachsteine und Anbringung derselben auf dem Dach außen auf der Dachsteinoberfläche sichtbar. Auch hierdurch wird das ästhetische Äußere beeinträchtigt.

Zur Farbgebung und als Schutz vor Witterungseinflüssen kann die Betonmasse vor der Aushärtung und/oder nach der Aushärtung beschichtet werden. Das Aufbringen einer Farbschicht vor dem Aushärten der Betonmasse des Dachsteinrohlings wird Nassbeschichtung genannt. Eine nach dem Austrocknen des Dachsteinrohlings aufgebrachte Farbbeschichtung wird als Trockenbeschichtung bezeichnet.

Diese Beschichtungen, die insbesondere ein Lack oder auch ein Klarlack sein kann, sollen Ausblühungen reduzieren und die Witterungsstabilität des Dachsteins verbessern. Allerdings können mit den üblicherweise zur Beschichtung verwendeten Dispersionsfarben oder (Klar-) Lacken auf Basis wässriger Polymerdispersionen lediglich sehr matte Oberflächen erzielt werden, die zudem nur einen unzureichenden Schutz vor Witterungseinflüssen bieten.

Eine mögliche Beschichtung eines Betonformteils, insbesondere eines Dachsteins, wird in DD PS 124 808 gezeigt. Zur Beschichtung wird auf die nicht-ausgehärteten Betonformteilen eine Beschichtung auf Basis eines Vinylchlorid-Vinylidenchlorid-Copolymer oder einem Terpolymer von Acrylsäure- und/oder Methylacrylsäureestern und/oder Styrol aufgetragen.

Die Verwendung von Styrolpolymeren in Dispersionen wie in der der DD PS 124 808, hat jedoch den Nachteil einer geringeren UV-Stabilität. Um eine lange Haltbarkeit der Farbbeschichtung zu gewährleisten sollte die Dispersionsfarbe jedoch eine hohe UV-Stabilität aufweisen. Anderenfalls kann der Lack abplatzen und die Dachsteinoberfläche ist der Witterung ungeschützt ausgesetzt. Zudem kann mit einer einzelnen Farbschicht, die nicht an die Oberfläche des Dachsteins angepasst wird, sondern vielmehr auf ein ästhetisches Erscheinungsbild ausgelegt ist, kein dauerhaft gutes Beschichtungsergebnis gewährleistet werden.

EP 3 219 764 A1 offenbart eine thermotrope, transparente Beschichtung, die mitunter Acrylbasierte Polymere aufweist, wodurch der Lichtdurchtritt durch das beschichtete Medium begrenzt werden soll.

Aus WO 2009/064282 A2 ist eine Beschichtungszusammensetzung zur Haftvermittlung bekannt, die unter anderem ein Acrylat als Addukt aufweist.

WO 2009/048515 A1 offenbart ein Verfahren zum Erhalt einer Farbe einer ausgehärteten Schicht aus einem Harz, insbesondere einem Acrylharz, welches mit Pigmenten vermengt ist, um die Beschichtung auszubilden.

WO 2008/057878 A2 zeigt einen Gegenstand mit einer ersten und einer zweiten Schicht, wobei die erste Schicht ein polares Material aufweist und die zweite Schicht eine Mischung aus einem nichtpolaren Polyolefin und einem Polydien-basierten Polyurethan oder einem Polydiolbasierten Polyurethan aufweist.

Aus WO 2006/048108 A1 ist ein Verfahren zum Herstellen von Formteilen bekannt, bei dem ein pigmentiertes Beschichtungsmittel und ein radikalisch vernetzbares Beschichtungsmittel, das nach Endvernetzung eine transparente Beschichtung ergibt, aufgebracht wird. Das vernetzbare Beschichtungsmittel enthält eine radikalisch vernetzbare Komponente, die auch ein Acrylat sein kann.

Aufgabe der vorliegenden Erfindung ist es deshalb, die Nachteile des Stands der Technik zu beseitigen und einen Dachstein mit Beschichtung bereitzustellen, der ohne erhöhten technischen Aufwand eine hohe UV-Beständigkeit, einen hohen Ausblühschutz, eine hohe Witterungsstabilität und eine geringe Anschmutzneigung mit anpassbarem Glanzgrad aufweist.

Hauptmerkmale der Erfindung sind im kennzeichnenden Teil von Anspruch 1 und 9 angegeben. Ausgestaltungen sind Gegenstand der Ansprüche 2 bis 8 und 10 bis 13.

Für einen Dachstein aus Beton mit einer Beschichtung auf einer Oberseite des Dachsteins, die mindestens eine erste Farbschicht aus einer ersten Reinacrylat-Dispersionsfarbe und mindestens eine zweiten Farbschicht aus einer zweiten Reinacrylat-Dispersionsfarbe aufweist, sieht die Erfindung vor, dass die erste Farbschicht als Nassbeschichtung auf einem den Dachstein ausbildenden, noch nicht ausgetrockneten Dachsteinrohling aufgebracht ist, so dass diese teilweise in den Dachsteinrohling eingedrungen ist, und die zweite Farbschicht, welche nach dem Trocknen der ersten Farbschicht mittels Trockenbeschichtung aufgebracht ist, die erste Farbschicht auf der Oberseite des Dachsteins vollständig bedeckt, wobei die erste und die zweite Farbschicht jeweils eine Schichtdicke von 20 - 70 µm und eine Pigment-Volumen-Konzentration von 2 - 38 % aufweisen.

Durch das Vorsehen zweier Farbschichten aus jeweils einer Reinacrylat-Dispersionsfarbe mit den entsprechenden Schichtdicken und Pigment-Volumen-Konzentrationen (PVK) wird eine gleichmäßige, geschlossene Beschichtung des Dachsteins gewährleistet, wodurch die Witterungsbeständigkeit verbessert ist.

Zudem wird die Oberfläche durch die erfindungsgemäße Beschichtung möglichst eben und glatt ausgeführt, wodurch die Anschmutzneigung der Oberfläche minimiert wird. Auch wird ein Ausblühen von Calciumcarbonat verhindert, wodurch ein langanhaltendes ästhetisches Erscheinungsbild des Dachsteins ermöglicht wird.

Die Oberseite des Dachsteins entspricht, derjenigen Fläche des Dachsteins, die beim eingedeckten Dach nach oben gerichtet ist und derjenigen Fläche gegenüberliegt, die in Richtung Dachinnenraum zeigt.

Als Reinacrylat-Dispersionsfarben, auch als Reinacrylat-Dispersionen bezeichnet, werden Acrylatpolymerdispersionen auf Basis von Acrylaten bezeichnet, wie beispielsweise n-Butylacrylat oder Ethyl/hexylacrylat mit Methylmethacrylat, ohne dass andere Monomere oder Polymere zugegeben werden. Im Folgenden wird der Begriff Dispersionsfarbe synonym mit Reinacrylat-Dispersionsfarbe verwendet.

Als Hauptbestandteile weisen Reinacrylat-Dispersionsfarben Bindemittel, Füllstoffe, Pigmente und Lösungsmittel auf. Der Anteil der festen Inhaltsstoffe, insbesondere der Füllstoffe und Pigmente, an der Formulierung der Reinacrylat-Dispersionsfarbe wird mit der Pigment-Volumen-Konzentration (PVK) beschrieben, welche den Volumenanteil der auch in der Dispersionsfarbe festen Inhaltsstoffe am getrockneten Film angibt.

Das Bindemittel besteht vorzugsweise aus den Acrylaten, beispielweise n-Butylacrylat, Ethyl/hexylacrylat und/oder Methylmethacrylat, ohne dass andere Monomere oder Polymere zugegeben werden.

Als Lösungsmittel wird vorzugsweise Wasser verwendet, welches eine mittlere Flüchtigkeit aufweist und keinen besonderen Sicherheitsbestimmungen bei der Beschichtung der Dachsteine erfordert, wie beispielweise vermehrte Belüftung der Produktionsanlagen, damit sich leicht flüchtige Lösungsmittel nicht in der Raumluft ansammeln.

Als Füllstoffe werden vorzugsweise Calciumcarbonat, Glimmer, welcher oft unter dem Markennamen Mica gehandelt wird, oder Quarzmehl verwendet.

Die Pigmente werden je nach gewünschter Farbe der beschichteten Dachsteine eingesetzt, beispielweise anorganische Pigmente, besonders bevorzugt aus der Gruppe der Eisenoxide, Titanoxid, Carbon Black/Indutstrieruß, Vanadate oder Spinellpigmente, oder organische Pigmente. Die unterschiedlichen Pigmente können einzeln oder gemischt der Dispersionsfarbe zugegeben werden, so dass individuell auf den Farbwusch des Kunden eingegangen werden kann. Mineralische Pigmente wie Eisenoxid weisen insbesondere eine hohe Stabilität auf und tragen zur UV-Stabilität der Dispersionsfarben bei.

Die PVK im Bereich von 2 bis 38 % ermöglicht die Einstellung des Glanzgrades der Dachsteinoberfläche je nach Kundenwunsch.

Der erzeugte Glanzgrad hängt direkt mit der PVK der Dispersionsfarbe zusammen. Je höher die PVK, desto matter wird die Oberfläche. Gleichzeitig werden Poren und Rauigkeiten des Dachsteins besser abgedeckt, was die Anschmutzneigung des Dachsteins reduziert.

Im Gegensatz hierzu erzeugt eine Dispersionsfarbe mit einem niedrigen PVK eine glänzende, möglichst ebene Oberfläche. Allerdings können Poren und Rauigkeiten nur teilweise ausgefüllt oder bedeckt werden.

Reinacrylat-Dispersionsfarben sind, Thermoplaste, die umso "klebriger" werden, je stärker sie erwärmt werden. Daher neigt ein beschichteter Dachstein bei höheren Temperaturen, wie beispielweise bei Sonneneinstrahlung auf das gedeckte Dach, zu einer verstärkten Anschmutzneigung.

Die Anschmutzneigung eines Dachsteins, der mit einer Dispersionsfarbe beschichtet wurde, kann mittels eines Dirt-Pick-Up Werts (DPU) bewertet werden. Zur Ermittlung des DPU-Werts wird in einem ersten Schritt eine Oberfläche des zu analysierenden Dachsteins, wie beispielweise ein unbeschichteter oder ein beschichteter Dachstein, farbmetrisch mit einem Colorimeter vermessen. Die Darstellung der Farbwerte erfolgt im L*a*b*-System.

Um Bedingungen, denen der beschichtete Dachstein nach Anbringung auf dem Dach im Sommer ausgesetzt sein kann, zu simulieren, wird der zu analysierende Dachstein in einem zweiten Schritt auf eine Temperatur von 80°C erwärmt und anschließend bei 80°C mit Aktivkohle bestäubt.

Die überschüssige Aktivkohle wird abgeschüttelt. Anschließend wird der beschichtete Dachstein bei Raumtemperatur mit Wasser versetzt und dadurch gewaschen. Ein Teil der Aktivkohle wird dabei abgewaschen, ein Teil verbleibt auf der Dachsteinoberfläche haften. Nach dem Trocknen des bestäubten und gewaschenen, zu analysierenden Dachsteins wird erneut eine farbmetrische Messung mit einem Colorimeter durchgeführt. Durch die noch anhaftende Restmenge Aktivkohle wird der Helligkeitswert L* verringert.

Die Helligkeitswerte vor und nach dem Anschmutzen werden ins Verhältnis gesetzt und ergeben den Resthelligkeitswert. Je höher der Wert der zweiten Messung ist, desto weniger neigt die Farbe zum Anlagern von Schmutz und Staub. Ein beschichteter Dachstein ohne jegliche Schmutzanlagerung würde keine Veränderung der Helligkeit und einen DPU von 100% mit einer Resthelligkeit von 100% zeigen. Ein Dachstein mit beispielsweise einem DPU von 75%, erreicht als Resthelligkeit 75% der Ausgangshelligkeit.

Vorzugsweise weist der erfindungsgemäß beschichtete Dachstein, insbesondere die äußere Farbschicht, welche beispielweise von der zweiten Farbschicht gebildet wird, einen Dirt-Pick-Up-Wert (DPU) mit einer Resthelligkeit von mindestens 75% auf. Dies gewährleistet ein langanhaltendes ästhetisches Erscheinungsbild des Dachsteins. Zudem wird eine Ansiedlung von Mikroorganismen und Algen minimiert, weil kein Nährboden für Organismen auf der Dachsteinoberfläche besteht.

In einer bevorzugten Ausführungsform weisen die erste und zweite Farbschicht jeweils eine Schichtdicke von 20 - 60 µm, insbesondere von 30 - 50 µm auf. Insbesondere weist die Beschichtung eine Gesamtschichtstärke von mindestens 60 µm im Mittel auf. Die angegebene Schichtstärke der Farbschicht und der Beschichtung beziehen sich jeweils auf die abgetrocknete Dispersionsfarbe.

In einer bevorzugten Ausführungsform weisen die Farbschichten aus Reinacrylat-Dispersionsfarbe nach dem Trocknen eine maximale Wasseraufnahme von 10 % auf. Dadurch wird verhindert, dass relevante Wassermengen in den Dachstein und somit ins Dach eindringen können. Zudem ist eine geringe Wasseraufnahme von unter 10 % kann vorteilhaft, weil dadurch aufgestaute Feuchtigkeit unter der Beschichtung entweichen kann. Allerdings kann eine zu hohe Wasseraufnahme auch zu einer Trübung des Dispersionsfilms, einem so genannten Weißanlaufen, führen. Diese Trübung kann auch bei Farbbeschichtungen der Dachsteine sichtbar werden und zu einer Milchigkeit der Dachsteine führen.

Eine üblicherweise verwendete Acrylatfarbe nimmt über den Anteil des Polymers mehr als 30% Wasser auf. Durch Auswahl einer Reinacrylat-Dispersionsfarbe, die bereits eigenständig eine niedrige Wasseraufnahme hat und einer geeigneten Auswahl von Farbadditiven, wie beispielsweise Lösemittel, Verdicker und Netzmittel, kann die Wasseraufnahme der Dispersionsfarbe auf unter 10% reduziert werden.

Die Wasseraufnahme einer Dispersionsfarbe auf Reinacrylatbasis die sich zur Dachsteinbeschichtung eignet, wird mittels Wasseraufnahmetest (WAN) bestimmt. Dabei wird die zu untersuchende Reinacrylat-Dispersionsfarbe als Farbschicht auf eine Teflonplatte aufgebracht. Nach Trocknung der Farbschicht wird diese von der Teflonplatte abgelöst, beispielweise abgekratzt, und gewogen. Die abgelöste Farbschicht wird 24 Stunden in Wasser gelagert und nach einer oberflächigen Trocknung erneut gewogen.

Durch Quellung, also der Aufnahme von Wasser in die Farbbeschichtung des Dachsteins, erfolgt eine Gewichtszunahme der abgelösten Farbschicht. Eine Farbschicht einer Beschichtung mit 10% Wasseraufnahme zeigt eine Gewichtszunahme von 10%.

Vorzugsweise sind die Farbschichten wasserundurchlässig. Dies verhindert, dass Feuchtigkeit durch die Beschichtung in den Dachstein eindringen kann und Feuchtigkeit, innerhalb des Dachstein, welche beispielweise über eine unbeschichtete Fläche des Dachsteins eingedrungen ist, zur Oberseite hin ausdampft, wodurch Ausblühungen auf der Dachsteinoberfläche verhindert werden.

Ausblühungen entstehen schon während des Abbindens von Beton durch die dabei entstehenden Calciumsalze. Weist ein Dachstein einen vollständigen Ausblühschutz auf, verhindert die getrocknete Beschichtung die Wanderung der Calciumsalze an die Dachsteinoberfläche.

Die Eignung einer Beschichtung Ausblühungen auf der Dachsteinoberfläche zu vermindern, kann durch einen Ausblühtest ermittelt werden. Dabei wird ein mit einer oder mehreren Farbschichten beschichteter Dachstein für fünf Tage einem Dampfbad bei 60°C ausgesetzt. Treten im Laufe dieser fünf Tage keine Veränderungen auf, wie beispielweise Verfärbungen durch Calciumablagerungen auf der Oberfläche, gilt der Dachstein als vollständig ausblühgeschützt.

In einer bevorzugten Ausführungsform weist die erste und/oder zweite Farbschicht eine erste oder zweite Reinacrylat-Dispersionsfarbe, Cellulose-Ether-Verdicker und/oder Polyurethan-Verdicker auf. Vorzugsweise enthalten die erste und die zweite Reinacrylat-Dispersionsfarbe Cellulose-Ether-Verdicker mit sehr hohen Molekularmassen, insbesondere 15.000 - 20.000 g/mol. Hierdurch kann sichergestellt werden, dass die Farbschichten nur sehr wenig bis gar kein Wasser aufnehmen.

Je nach Beschaffenheit des zu beschichtenden Dachsteins und des gewünschten Glanzgrades der Dachsteine sind verschiedene Ausführungsformen bevorzugt.

Der erzeugte Glanzgrad des beschichteten Dachsteins hängt direkt mit der PVK der Dispersionsfarbe zusammen und wird durch den Anteil von Füllstoffe und Pigmente an der Dispersionsfarbe bestimmt. Je höher die PVK, desto matter wird die Oberfläche.

Der Glanzgrad hat bei der Dachsteinbeschichtung sowohl einen Geltungswert als ästhetische Komponente zur optischen Gestaltung, als auch einen Funktionswert. Der Glanzgrad ist ein Merkmal für die Widerstandsfähigkeit des Dachsteins gegen witterungsbedingte Belastungen und für eine geringe Anschmutzneigung.

Der Glanzgrad wird mit einem Glanzmessgerät bei einem Messwinkel von 60° bestimmt. Eine Dispersionsfarbe mit einem PVK von größer als 38 % würde einen Reflektormeterwert von 0 bis 2 und eine matte Oberfläche erzeugen. Eine Dispersionsfarbe mit einem PVK von 25 % bis 27 % würde einen Reflektormeterwert von ungefähr 5 und somit eine seidenglänzende Oberfläche erzeugen. Ein Klarlack ohne Bindemittel und einem PVK von 0 % würde einen Reflektormeterwert von größer 10 erzeugen, was einer glänzenden Oberfläche entspricht.

In einer bevorzugten Ausführungsform weist der Dachstein eine erste Farbschicht mit einem PVK im Bereich von 25 bis 38 % und eine zweite Farbschicht mit einem PVK im Bereich von 2 bis 10 % auf. Diese Ausführungsform ist insbesondere für Dachsteine mit rauer Oberflächenbeschaffenheit geeignet, weil die hohe Pigment-Volumen-Konzentration der ersten Farbschicht Poren und Unebenheiten der Oberfläche ausfüllen und abdecken kann. Der hohe Anteil an Füllstoffen und Pigmenten schafft eine gleichmäßige Oberfläche, so dass die zweite Farbschicht dazu genutzt werden kann, die Oberfläche weiter zu glätten sowie den gewünschten Glanzgrad zu erzielen. Die zweite Farbschicht wird insbesondere nach dem Trocknen der ersten Farbschicht aufgebracht. Die niedrige PVK der zweiten Farbschicht erhöht den Glanzgrad der Beschichtung und erzeugt eine glänzende Oberfläche auf der Oberseite des Dachsteins. Der Reflektometerwert der glänzenden zweiten Schicht ist insbesondere größer als 10 bei einem Messwinkel von 60°. Die zweite Schicht dient somit insbesondere der Anpassung des Glanzgrades an den Kundenwunsch

Bei Betondachsteinen, die sehr glatt und porenfrei sind, ist die Verwendung von Dispersionsfarben mit niedrigem PVK als erste Farbschicht bevorzugt. Enthält die erste auf die Dachsteinoberfläche aufgebrachte Farbschicht eine hohe PVK, können die festen Füllstoffe und Pigmente beim Auftragen mittels Sprühverfahren die Oberfläche aufrauen.

In einer bevorzugten Ausgestaltung weist der Dachstein eine erste Farbschicht mit einer PVK im Bereich von 2 bis 10 % und eine zweite Farbschicht mit einer PVK im Bereich von 25 bis 38 % auf. Dadurch kann eine bereits glatte und nahezu porenfreie Dachsteinoberfläche schonend beschichtet werden, wodurch eine sehr glatte und ebene Beschichtung erhalten wird, die ein mattes Erscheinungsbild aufweist.

Hierfür wird zunächst die erste Dispersionsfarbe, die eine geringe PVK aufweist, beispielsweise 2 %, aufgetragen. Im zeitlichen Versatz nach Trocknung der ersten Farbschicht wird die zweite Dispersionsfarbe mit hoher PVK, von beispielsweise 38 %, aufgetragen. Dadurch entsteht ein Dachstein mit matter Oberfläche, der bei einem Messwinkel von 60° einen Reflektormeterwert von kleiner als 5, oder bevorzugter Weise kleiner als 3 und in besonders bevorzugter Weise kleiner als 2 aufweist. Hierdurch wird eine einheitlich matte Oberfläche erhalten, die ein besonders mattes Erscheinungsbild aufweist.

In einer weiteren alternativen Ausgestaltung weist der Dachstein zwei Farbschichten auf, die beide eine PVK von 23 bis 30 % aufweisen. Die mittlere PVK der ersten Farbschicht kann Dachsteinoberflächen, die eine mittlere Rauigkeit aufweisen, glätten. Die ebenfalls mittlere PVK der zweiten Farbschicht erzeugt eine seidenmatte bis seidenglänzende Oberfläche der Beschichtung des Dachsteins.

Insbesondere kann dabei die gleiche Dispersionsfarbe für beide Farbschichten verwendet werden. Dies ist einfach und kostengünstig herstellbar. Eine seidenmatte oder eine seidenglänzende Oberfläche weist bei einem Messwinkel von 60° einen Reflektometerwert von ungefähr 5 auf. Seidenmatt und seidenglänzend beschreiben im Allgemeinen den gleichen Glanzgrad.

Vorzugsweise ist der Dachstein mit einer zementbasierten Glättungsschicht versehen, auf der eine erste und eine zweite Farbschicht appliziert ist, die jeweils eine PVK im Bereich von 2 bis 10 % aufweist. Dadurch wird eine sehr ebene und glatte Oberfläche erzielt, die einen deutlichen Glanz aufweist.

In einer bevorzugten Ausführungsform ist die erste Reinacrylat-Dispersionsfarbe der ersten Farbschicht zu 20 bis 40 % in eine Oberfläche der Oberseite des Dachsteins eingedrungen. Die Dispersionsfarbe der ersten Farbschicht dringt somit zumindest zu einem geringen Anteil in das poröse Betonmaterial des Dachsteins ein. Die Eindringtiefe der ersten Farbschicht in die Oberfläche des Dachsteins wird durch die Viskosität und die Additive der Dispersionsfarbe eingestellt. Durch das Eindringen der Dispersionsfarbe der ersten Farbschicht in die Oberfläche des Dachsteins dient diese als Haftvermittler, so dass die Beschichtung dauerhaft auf der Oberseite des Dachsteins eine hohe Qualität aufweist, ohne Abzublättern. Die zweite Farbschicht wird, insbesondere nach dem Trocknen der ersten Farbschicht, auf diese aufgetragen.

Erfindungsgemäß wird die erste Farbschicht als Nassbeschichtung auf den noch nicht ausgetrockneten Dachsteinrohling aufgebracht. Dadurch kann eine gute Haftung zwischen dem Dachsteinmaterial und der Dispersionsfarbe erhalten werden. Dabei ist bevorzugt, dass die Schichtdicke der Nassbeschichtung, welche durch die erste Farbschicht gebildet wird, nach dem Trocknen auf der Oberfläche des Dachsteins 20% bis 40% unter einer theoretischen Schichtdicke liegt.

Die Eindringmenge und die Funktion der ersten Farbschicht als Haftvermittler wird dabei durch die Viskosität und verschiedene Additive bestimmt.

In einer bevorzugten Ausführungsform weist die Beschichtung des Dachsteins eine dritte Farbschicht aus einer dritten Reinacrylat-Dispersionsfarbe auf, welche die zweite Farbschicht bedeckt. Dadurch kann eine noch gleichmäßigere, ebene und haltbare Beschichtung des Dachsteins erzielt werden.

Vorzugsweise unterscheiden sich die Zusammensetzungen der ersten, der zweiten und/oder der dritten Farbschicht voneinander. Dadurch können die einzelnen Farbschichten an unterschiedliche Einflussfaktoren und Kundenwünsche angepasst werden, beispielweise eine sehr raue Dachsteinoberfläche, eines günstig hergestellten Dachsteins, bei gleichzeitig gewünschtem hohen Glanzgrad.

Die Erfindung betrifft zudem ein Verfahren zur Beschichtung eines Dachsteins mit einer erfindungsgemäßen Beschichtung. Dabei umfasst das Verfahren folgende Schritte:
- Aufbringen einer ersten Farbschicht aus einer ersten Reinacrylat-Dispersionsfarbe auf die Oberseite eines frischen Dachsteinrohlings,
- Trocknung des Dachsteinrohlings und der ersten Farbschicht,
- Aufbringen einer zweiten Farbschicht aus einer zweiten Reinacrylat-Dispersionsfarbe auf die getrocknete erste Farbschicht und
- Trocknung der zweiten Farbschicht.

Durch das Verfahren wird eine Beschichtung eines Dachsteins erhalten, die eine gleichmäßige, ebene Beschichtung liefert, die zudem lange haltbar ist und eine dauerhaft hohe Qualität aufweist.

Es bestehen zwei Möglichkeiten eine Farbschicht auf einen Dachstein zu applizieren, nämlich mittels Nass- oder Trockenbeschichtung. Bei einer Nassbeschichtung wird die Dispersionsfarbe unmittelbar nach der Extrusion des Dachsteins auf den noch nicht vollständig abgebundenen Beton und noch bevor der Dachstein in die Härtekammer gefahren wird, appliziert. Die Farbschicht und der Dachsteinrohling haben dann insbesondere mindestens 6 h um zu trocknen und einen Film zu bilden. Allerdings ist die Ausbildung eines gleichmäßigen Farbfilms unter diesen Umständen schwierig, da eine hohe Luftfeuchtigkeit herrscht und dass Anmachwasser des Betons mit Ionen gesättigt ist.

Bei einer Trockenbeschichtung wird die Dispersionsfarbe unmittelbar nach der Härtung auf den noch warmen Dachstein appliziert, wobei die Dispersionsfarbe innerhalb von einer Minute tasttrocken sein soll.

In der Regel vermittelt die Dispersionsfarbe, die mittels Nassbeschichtung, schon vor dem Abbinden des Betons aufgetragen wird, den Ausblühschutz. Die Dispersionsfarbe dringt dabei in den Dachstein ein und vermittelt unter anderem eine Haftgrundlage für weitere Farbschichten, die mit zeitlichem Versatz nach dem Abtrocknen dieser Schicht aufgetragen werden.

In einer bevorzugten Fortbildung wird nach dem Trocknen der zweiten Farbschicht, eine dritte Farbschicht aufgetragen, welche die zweite Farbschicht vollständig bedeckt. Dadurch kann eine qualitativ hochwertige Dachsteinbeschichtung erzielt werden.

Vorzugsweise erfolgt die Trocknung zwischen den einzelnen Farbapplikationsschritten bei Raumtemperatur, unter Warmlufteinfluss oder durch Infrarotbestrahlung.

Bei einer mittels Nassbeschichtung aufgetragenen Farbschicht erfolgt die Trocknung vorzugsweise ungefähr 6 h bei 50 °C, wobei neben der Farbschicht auch der Dachstein an sich trocknen muss.

Bei einer Trocknung einer Farbschicht, die durch Trockenbeschichtung aufgetragen wurde, bei Raumtemperatur sind die beschichteten Dachsteine bereits nach ca. 25 min stapelbar. Erfolgt die Trocknung in einer Warmluftkammer, die zwischen 80 °C und 130 °C temperiert ist, sind die beschichteten Dachsteine nach 18 sec. stapelbar. Bei einer Trocknung durch Infrarotbestrahlung wird nach 20 bis 30 sec ein Trocknungsgrad erreicht, bei dem die beschichteten Dachsteine stapelbar sind.

In einer bevorzugten Ausgestaltung wird der Dachstein mit einer zementbasierten Glättungsschicht versehen, auf der eine erste und eine zweite Farbschicht appliziert wird, die jeweils eine PVK im Bereich von 2 bis 10 % aufweist. Dadurch weist der Dachstein nach dem Trocknen eine Beschichtung mit einem deutlichen Glanz auf. Einen deutlichen Glanz weist eine Oberfläche auf, die insbesondere einen Reflektometerwert von größer als 10 bei einem Messwinkel von 60° hat.

Erfindungsgemäß wird die erste Farbschicht als Nassbeschichtung und die zweite Farbschicht als Trockenbeschichtung auf den Dachstein aufgetragen, wobei die Schichtdicke der ersten mittels Nassbeschichtung aufgebrachten Farbschicht nach dem Trocknen auf der Oberfläche 20 % bis 40 % unter der theoretischen Schichtdicke liegt. Somit dringt die erste Reinacrylat-Dispersionsfarbe zu 20 bis 40 % Volumenanteil in den Dachsteinrohling ein. Dadurch wird eine sehr gute Haftung der ersten Farbschicht an dem Dachstein erzielt.

Ein Dachsteinrohling ist ein frisch hergestellter Dachstein, bei dem der Beton noch nicht vollständig abgebunden ist und Restfeuchtigkeit aufweist.

Nach der Trocknung der ersten Farbschicht wird mittels Trockenbeschichtung eine zweite oder mehrere weitere Farbschichten aufgebracht. Dadurch wird eine ebene und gleichmäßige Beschichtung erhalten, die eine hohe Haltbarkeit aufweist.

Vorzugsweise weisen die erste und die zweite Reinacrylat-Dispersionsfarbe zum Aufbringen der ersten und der zweiten Farbschicht eine PVK von 2 bis 38 % auf. Dieser Bereich an Pigment-Volumen-Konzentrationswerten ermöglicht die Aufbringung auf raue bis glatte Dachsteinoberflächen und liefert matte bis hochglänzende Beschichtungen, die je nach Kundenwunsch eingestellt werden können.

In einer alternativen Ausgestaltung unterscheiden sich die Zusammensetzungen der Dispersionsfarben der ersten und der zweiten Farbschicht des Dachsteins. Dadurch kann gezielt auf die unterschiedlichen Oberflächengegebenheiten und Kundenwünsche eingegangen werden.

Generell können Dispersionsfarben, die sich zur Dachsteinbeschichtung eignen, für die Nass- und Trockenbeschichtungen die gleiche, oder unterschiedliche Rezepturen aufweisen und gleiche sowie unterschiedliche PVK-Werte aufweisen.

Bevorzugterweise zeichnet sich eine Dispersionsfarbe die sich zur Farbbeschichtung eines Dachsteins eignet, dadurch aus, dass die Dispersionsfarbe eine PVK von 2 bis 38 % aufweist und eine mit der Dispersionsfarbe hergestellte Farbbeschichtung nicht mehr als 10% Wasser aufnimmt. Zudem ist bevorzugt, dass die Beschichtung im DPU-Test eine Resthelligkeit von mindestens 75% aufweist.

In einer bevorzugten Ausgestaltung weist die Dispersionsfarbe eine Viskosität von weniger als 24 sec im DIN 4mm Becher auf. Dies ermöglicht eine einfache Applikation der Dispersionsfarbe auf den Dachstein.

Vorzugsweise wird die erste, zweite und/oder eine weitere Dispersionsfarbe mittels Airless-Sprühverfahren aufgetragen. Insbesondere wird bei dem Airless-Sprühverfahren ein Sprühdruck von 8 bar eingesetzt. Dieses Applikationsverfahren ermöglicht eine einfache und gleichmäßige Aufbringung der Dispersionsfarbe auf den Dachstein.

Alternative Applikationsverfahren sind ein Airassistet-Sprühverfahren, bei dem die Dispersionsfarbe im Luftstrom zerstäubt wird. Dadurch wird eine bessere Zerstäubung und somit gleichmäßigere Beschichtung erzielt. Allerdings erfolgt die Applikation bei Überdruck in der Sprühkabine, so dass entsprechende Anlagenbauteile benötigt werden und das Verfahren höhere Sicherheitsrisiken für die Anlagenbetreuer mit sich bringt.

In einer weiteren alternativen Ausführungsform werden die Farbschichten mittels Gießen oder Tauchen appliziert. Dadurch können neben der Oberseite des Dachsteins zugleich die Seitenkanten und zumindest bei einer Tauchapplikation auch die Unterseite des Dachsteins beschichtet werden. Hierdurch können auch die anderen Dachsteinflächen vor eindringendem Wasser geschützt werden und der Dachstein weist ein gleichmäßiges Erscheinungsbild auf.

Für die Applikation einer Dispersionsfarbe wird eine eher niedrige Viskosität bevorzugt, weil dann mit wenig Sprühdruck gearbeitet werden kann, wodurch das Auftreten von gesundheitsschädlichem Sprühnebel reduziert werden kann und das Filtern der Farbe einfacher ist. Es muss jedoch auch sichergestellt werden, dass die Farbe während der Lagerung nicht sedimentiert. Um eine Sedimentation zu vermeiden, wäre eine mittlere bis hohe Viskosität vorteilhaft.

Es hat sich gezeigt, dass der Einsatz von Cellulose-Ether-Verdickern hierbei einen guten Kompromiss liefert. Da diese Verdicker jedoch die Wasseraufnahme teilweise negativ beeinflussen können, sind Cellulose-Ether mit sehr hoher Molekularmasse, insbesondere mit Molekularmassen zwischen 15.000 und 20.000 g/mol, zu bevorzugen, da diese bereits bei sehr kleiner Einsatzmenge eine gute Wirkung zeigen.

Eine Dispersionsfarbe mit einer Viskosität von weniger als 24 sec im DIN 4mm Becher weist vorzugsweise eine Lagerstabilität von 6 Monaten auf. Das bedeutet, dass innerhalb dieses Zeitraums kein fester Bodensatz durch Sedimentation auftritt.

In einer bevorzugten Ausgestaltung wird die erste Farbschicht mit einer Schichtstärke von 150 g/m² bis 300 g/m² aufgetragen. Dies gewährleistet eine ausreichende Filmdicke, um eine gleichmäßige Farbschicht mit geschlossenem Farbfilm zu ermöglichen.

In einer bevorzugten Ausgestaltung wird die erste, zweite und/oder weitere Farbschicht derart aufgetragen, dass die erste, zweite und/oder weitere Farbschicht nach dem Trocknen einen geschlossenen Farbfilm von 30 µm bis 60 µm Schichtdicke pro Farbschicht aufweist.

Durch das teilweise Eindringen der Dispersionsfarbe der ersten Farbschicht in den noch nicht ausgehärteten Dachstein, die mittels Nassbeschichtung aufgetragen wird, ergibt sich nach dem Trocknen ein geschlossener Farbfilm von 30 µm bis 60 µm Schichtdicke. Auch beim Auftragen mehrerer Farbbeschichtungen weisen die einzelnen Farbschichten jeweils eine Schichtdicke von 30 µm bis 60 µm auf. Dadurch kann eine gleichmäßige, geschlossene Beschichtung gewährleitet werden.

Die überwiegende Anzahl der Dispersionsfarben ist alkalisch eingestellt. Dies ermöglicht die Stabilisierung der Dispersion. Die Alkalität kann zum einen in klassischer Art und Weise mit Ammoniak erfolgen, oder mit Kali- und/oder Natronlauge.

In einer bevorzugten Ausgestaltung weist eine Dispersionsfarbe mineralische Pigmente wie Eisenoxid auf und ist dadurch ohne Verwendung von Ammoniak alkalisch eingestellt.

Die Verwendung von Kali- und/oder Natronlauge ist bei der Herstellung von beschichteten Dachsteinen zu bevorzugen, um an der Produktionsstätte eine Gefährdung durch Ammoniakdämpfe zu vermeiden, auch wenn die Verwendung von Kali- oder Natronlauge die Wasseraufnahme der trockenen Farbe negativ beeinflussen kann.

Eine vermehrte Wasseraufnahme des getrockneten Farbfilms kann zum Weißanlaufen des Films führen, der die Funktion der Beschichtung beeinträchtigen kann. Die Wasseraufnahme der getrockneten Dispersionsfarbe auf dem Dachstein wird daher mit der WAN-Methode bewertet.

In einer bevorzugten Ausgestaltung wird das Bindemittel der im Verfahren eingesetzten Dispersionsfarbe so eingestellt, dass auch nach Zementzugabe die Viskosität der Dispersionsfarbe nicht höher als 23 s bis 27 s im DIN 4 mm Becher ansteigt.

Eine Polymerdispersion zeigt typischer Weise eine Instabilität gegen mehrwertige Ionen wie Ca²⁺ oder Fe³⁺. Da der Beton der Dachsteine beim Aushärten jedoch große Mengen Calciumlonen freisetzt, muss die Dispersion eine gute Stabilität gegenüber Calcium aufweisen. Diese darf jedoch auch nicht so ausgeprägt sein, dass die Dispersionsfarbe zu tief in den Dachstein eindringt.

Die Eigenschaft der Dispersionsfarbe kann mit dem Zementstabilitätstest (ZST) bewertet werden. Dabei wird eine kleine Menge Zement zu einer Dispersionsfarbe gegeben (10g/1000g Farbe). Eine zur Dachsteinbeschichtung geeignete Dispersionsfarbe weist einen Viskositätsanstieg um 4 bis 6 sec im DIN 4mm Becher auf, was bedeutet, dass die Viskosität der Dispersionsfarbe auch nach Zementzugabe nicht höher als 23s bis 27s im DIN 4mm Becher ansteigt.

Die Glasumwandlungstemperatur (Tg) sollte so hoch wie möglich liegen, um eine geringe Anschmutzungsneigung zu erzielen. Bei Dispersionsfarben, die zur Dachsteinbeschichtung geeigneten sind, ist daher eine möglichst hohe Glasumwandlungstemperatur wünschenswert. Allerdings neigen Dispersionsfarben mit zu hoher Tg zur Rissbildung und schlechter Verfilmung, was die Haltbarkeit der Beschichtung des Dachsteins negativ beeinflusst.

Die Glasumwandlungstemperatur (Tg) gibt die Temperatur an bei der die Eigenschaften einer Reinacryl-Dispersionsfarbe zur Applikation einer Farbschicht und auch die getrocknete Farbschicht von einem thermoplastischen Verhalten zu einem duroplastischen Verhalten wechselt. Vorzugsweise sollte die zur Beschichtung eingesetzte Dispersionsfarbe bei der Verarbeitung und Applikation ein thermoplastisches Verhalten zeigen, um eine gleichmäßige Filmbildung gewährleisten zu können. Allerdings ist es ebenfalls bevorzugt, dass der beschichtete Dachstein auf dem Dach ein duroplatisches Verhalten zeigt, um eine möglichst geringe Anschmutzneigung aufzuweisen. Auf einem fertig eingedeckten Dach können die Dachsteine leicht bis zu 80 °C im Sommer bei Sonneneinstrahlung erreichen.

In einer bevorzugten Ausgestaltung weist die Dispersionsfarbe eine Glasumwandlungstemperatur (Tg) von 10 bis 50°C, insbesondere 20 bis 50 °C. Dies ermöglicht eine gute Filmbildung bei dem Herstellungsverfahren und eine möglichst geringe Anschmutzneigung des fertigen Dachsteins.

In einer bevorzugten Ausgestaltung weist die Dispersionsfarbe für eine Nassbeschichtung einen Tg auf, der zwischen 19°C und 21°C liegt und für eine Trockenbeschichtung einen Tg auf, der zwischen 30°C und 50°C liegt. Je nach Applikation der Dispersionsfarbe als Nass- oder Trockenbeschichtung kann die Tg angepasst werden.

Vorzugsweise weist die Dispersionsfarbe bei der Applikation eine Mindestfilmbildetemperatur (MFT) von 5 bis 10°C. Auch wenn die Beschichtung bereits nach ca. 18 sec tasttrocken ist, so dauert eine vollständige Filmbildung und Trocknung ca. 4 Wochen. Um die Lagerung der beschichteten und tasttrockenen Dachsteine zu erleichtern, werden diese meist auf einem außenseitigen Lagerplatz gestapelt. Durch die niedrige MFT kann auch bei einer Temperatur, die beispielweise auf einem draußen liegenden Lagerplatz herrscht, eine ausreichende Filmbildung gewährleistet werden. So können die vorgetrockneten, beschichteten Dachsteine zur Endtrocknung gestapelt und draußen gelagert werden, ohne dass eine Temperierung notwendig wäre.

Um eine verbesserte Haltbarkeit des Dachsteins zu vermitteln, sollten zur Dachsteinbeschichtung geeignete Dispersionsfarben auch bei Temperaturen unterhalb der Glasumwandlungstemperatur eine gute Filmbildung aufweisen. Hierzu werden Filmbildehilfsmittel (FBH) eingesetzt. Diese senken die Mindestfilmbildetemperatur (MFT) unter die Tg. Dabei weisen die Filmbildehilfsmittel vorzugsweise einen Siedepunkt von mehr als 250°C auf, damit in den Härtekammern der Dachsteinwerke keine kritischen Lösemitteldämpfe entstehen.

Vorzugsweise werden 2,2,4-Trimethyl-1,3-pentandiolmonoisobutyrat (Markenbezeichnung: Texanol), Ethylenglycolether oder hochsiedene Kohlenwasserstoffe als Filmbildehilfsmittel eingesetzt. Dabei kann insbesondere bevorzugt sein, dass diese Filmbildehilfsmittel wasserlöslich sind. Dadurch können diese aus der Farbschicht, beispielweise durch Regen, ausgewaschen werden, wodurch die Glasumwandlungstemperatur der Beschichtung des fertig, beschichteten Dachsteins wieder steigt.

### Ausführungsbeispiele

Exemplarische Rezepturen für Dispersionsfarben, die sich zur Nassbeschichtung eines Dachsteins eignen, werden in folgenden Ausführungsbeispielen näher beschrieben. Nassbeschichtungen vermitteln in der Regel den Ausblühschutz des Dachsteins. Eine Reinacrylat-Dispersionsfarbe wird als Nassbeschichtung als erste Farbschicht aufgetragen.

### Ausführungsbeispiel Nassbeschichtung 1

Dieses Ausführungsbeispiel stellt die Basis-Rezeptur einer Dispersionsfarbe für sehr glatte, zementreiche Oberflächen dar:
90% Bindemittel
5% mineralische Pigmente wie Eisenoxide
5% Filmbildehilfsmittel mit Siedepunkten > 250°C; Mineralöl basierte Entschäumer; PU-basierte Verdicker
Die MFT (Mindestfilmbildetemperatur) ist auf 5°C - 10°C eingestellt
Die PVK ist 2 %

### Ausführungsbeispiel Nassbeschichtung 2

Dieses Ausführungsbeispiel stellt die Basis-Rezeptur einer Dispersionsfarbe für normale Oberflächen mit mittlerer Rauheit dar:
50% Bindemittel (50% Feststoffgehalt)
30% Füllstoffe (Calciumcarbonat und Glimmer)
10% Pigmente (Eisenoxide)
5% Filmbildehilfsmittel mit Siedepunkten > 250°C; Mineralöl basierte Entschäumer; Cellulose-Ether-Verdicker
5% Wasser
Die MFT (Mindestfilmbildetemperatur) ist auf 5°C - 10°C eingestellt
Der Feststoffgehalt der Dispersionsfarbe liegt vorzugsweise > 55%
Die PVK ist 27 %

### Ausführungsbeispiel Nassbeschichtung 3

Dieses Ausführungsbeispiel stellt die Basis-Rezeptur einer Dispersionsfarbe für raue Oberflächen dar:
30% Bindemittel (50% Feststoffgehalt)
45% Füllstoffe (Calciumcarbonat und Glimmer oder kugelförmige Leichtfüller)
10% Pigmente (Eisenoxide)
5% Filmbildehilfsmittel mit Siedepunkten > 250°C; Mineralöl basierte Entschäumer; Cellulose-Ether-Verdicker
10% Wasser
Die MFT (Mindestfilmbildetemperatur) ist auf 5°C - 10°C eingestellt
Der Feststoffgehalt der Dispersionsfarbe liegt vorzugsweise > 55%
Die PVK ist 44 %

Die Anforderung an eine Trockenbeschichtung liegt in einer hohen Witterungsstabilität und einem geringen DPU. Dabei müssen Kompromisse bei dem Ausblühschutz eingegangen werden. Die Zusammensetzung der Dispersionsfarbe zur Trockenbeschichtung beeinflusst den Glanzgrad der Farbschicht. Exemplarische Rezepturen für eine Trockenbeschichtung werden in folgenden Ausführungsbeispielen beschrieben. Die Reinacrylat-Dispersionsfarben können dabei als Trockenbeschichtung als eine einzigen oder als mehrere Farbschichten aufgetragen werden.

Die Glasumwandlungstemperatur der Trockenbeschichtung kann beispielsweise 30°C bis 50°C betragen.

Da sich Dachsteine in Ihrer Rauigkeit unterscheiden, haben sich verschiedene Basisrezepturen als geeignet erwiesen, mit denen ein hoher Glanzgrad erzeugbar ist.

### Ausführungsbeispiel der Trockenbeschichtung 1

Dieses Ausführungsbeispiel stellt die Basis-Rezeptur einer Dispersionsfarbe für sehr glänzende Oberflächen dar:
90% Bindemittel
5% mineralische Pigmente wie Eisenoxide
5% Filmbildehilfsmittel mit Siedepunkten > 250°C; Mineralöl basierte Entschäumer; PU-basierte Verdicker
Die MFT (Mindestfilmbildetemperatur) ist auf 5°C - 10°C eingestellt
Die PVK ist 2 %

### Ausführungsbeispiel der Trockenbeschichtung 2

Dieses Ausführungsbeispiel die Basis-Rezeptur einer Dispersionsfarbe für eine seidengläzende/seidenmatte Oberflächen dar:
50% Bindemittel (50% Feststoffgehalt)
30% Füllstoffe (Calciumcarbonat und Glimmer)
10% Pigmente (Eisenoxide)
5% Filmbildehilfsmittel mit Siedepunkten > 250°C; Mineralöl basierte Entschäumer; Cellulose-Ether-Verdicker
5% Wasser
Die MFT (Mindestfilmbildetemperatur) ist auf 5°C - 10°C eingestellt
Der Feststoffgehalt der Dispersionsfarbe liegt vorzugsweise > 55%
Die PVK ist 27 %

### Ausführungsbeispiel der Trockenbeschichtung 3

Dieses Ausführungsbeispiel stellt die Basis-Rezeptur einer Dispersionsfarbe für matte Oberflächen dar:
35% Bindemittel (50% Feststoffgehalt)
40% Füllstoffe (Calciumcarbonat und Glimmer oder kugelförmige Leichtfüller)
10% Pigmente (Eisenoxide)
5% Filmbildehilfsmittel mit Siedepunkten > 250°C; Mineralöl basierte Entschäumer; Cellulose-Ether-Verdicker
10% Wasser
Die MFT (Mindestfilmbildetemperatur) ist auf 5°C - 10°C eingestellt
Der Feststoffgehalt der Dispersionsfarbe liegt vorzugsweise > 55%
Die PVK ist 38 %

Wird die Dispersionsfarbe auf Reinacrylatbasis als Kombination von Nass- und Trockenbeschichtung aufgetragen, können die einzelnen Farbschichten gleiche oder verschiedene Rezepturen aufweisen.

Durch eine erhöhte Anzahl und eine Kombination verschiedener Farbschichten, kann die Rezeptur der jeweiligen Dispersionsfarbe, die zur Beschichtung verwendet wird, eine optimale, zu der Anforderung passende Rezeptur aufweisen.

Meist ist die erste Farbschicht, die mittels Nassbeschichtung aufgetragen wird, auf die Beschaffenheit der Oberfläche der Oberseite des Dachsteins angepasst. Die zweite oder jede weitere Farbschicht kann dann auf den gewünschten Glanzgrad oder optischen Wunsch angepasst sein.

Es ist durchaus möglich, dass es Anwendungen gibt, bei denen die Dispersionsfarbe die bei einer Nass- und Trockenbeschichtung eingesetzt wird, die gleiche Rezeptur aufweist. Für diesen Fall weist die Dispersionsfarbe das Anforderungsprofil beider Beschichtungstypen auf.

Sämtliche aus den Ansprüchen, der Beschreibung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

Die Erfindung ist nicht auf eine der vorbeschriebenen Ausführungsbeispiele beschränkt, sondern in vielfältiger Weise abwandelbar.

## Patentansprüche

1. Dachstein aus Beton mit einer Beschichtung auf einer Oberseite des Dachsteins, die mindestens eine erste Farbschicht aus einer ersten Reinacrylat-Dispersionsfarbe und mindestens eine zweiten Farbschicht aus einer zweiten Reinacrylat-Dispersionsfarbe aufweist, **dadurch gekennzeichnet, dass** die erste Farbschicht als Nassbeschichtung auf einem den Dachstein ausbildenden, noch nicht ausgetrockneten Dachsteinrohling aufgebracht ist, so dass diese teilweise in den Dachsteinrohling eingedrungen ist, und die zweite Farbschicht, welche nach dem Trocknen der ersten Farbschicht mittels Trockenbeschichtung aufgebracht ist, die erste Farbschicht vollständig bedeckt, wobei die erste und die zweite Farbschicht jeweils eine Schichtdicke von 20 - 70 µm und eine Pigment-Volumen-Konzentration von 2 - 38 % aufweisen.

2. Dachstein mit einer Beschichtung nach Anspruch 1, **dadurch gekennzeichnet, dass** die erste und zweite Farbschicht jeweils eine Schichtdicke von 30 - 60 µm, insbesondere von 20 - 50 µm aufweisen.

3. Dachstein mit einer Beschichtung nach einem der vorhergehenden Ansprüche, **dadurch gekennzeichnet, dass** die Farbschichten wasserundurchlässig sind.

4. Dachstein mit einer Beschichtung nach einem der vorhergehenden Ansprüche, **dadurch gekennzeichnet, dass** die erste und/oder zweite Farbschicht eine erste und/oder zweite Reinacrylat-Dispersionsfarbe, Cellulose-Ether-Verdicker und/oder Polyurethan-Verdicker aufweist.

5. Dachstein mit einer Beschichtung nach einem der vorhergehenden Ansprüche, **dadurch gekennzeichnet, dass** die zweite Farbschicht einen Dirt Pick-Up-Wert (DPU) mit einer Resthelligkeit von mindestens 75% aufweist.

6. Dachstein mit einer Beschichtung nach einem der vorhergehenden Ansprüche **dadurch gekennzeichnet, dass** die erste Reinacrylat-Dispersionsfarbe der ersten Farbschicht zu 20 - 40 % in eine Oberfläche der Oberseite des Dachsteins eingedrungen ist.

7. Dachstein mit einer Beschichtung nach einem der vorhergehenden Ansprüche, **dadurch gekennzeichnet, dass** die Beschichtung eine dritte Farbschicht aus einer dritten Reinacrylat-Dispersionsfarbe aufweist.

8. Dachstein mit einer Beschichtung nach einem der vorhergehenden Ansprüche, **dadurch gekennzeichnet, dass** sich die Zusammensetzungen der ersten, der zweiten und/oder der dritten Farbschicht voneinander unterscheiden.

9. Verfahren zur Beschichtung eines Dachsteins nach einem der vorhergehenden Ansprüche, mit folgenden Schritten:
• Aufbringen einer ersten Farbschicht aus einer ersten Reinacrylat-Dispersionsfarbe als Nassbeschichtung auf die Oberseite eines frischen Dachsteinrohlings,
• Trocknung des Dachsteinrohlings und der ersten Farbschicht,
• Aufbringen einer zweiten Farbschicht aus einer zweiten Reinacrylat-Dispersionsfarbe auf die getrocknete erste Farbschicht und
• Trocknung der zweiten Farbschicht.

10. Verfahren nach Anspruch 9 **dadurch gekennzeichnet, dass** die erste und zweite Dispersionsfarbe eine PVK von 2 bis 38 % aufweist

11. Verfahren nach einem der Ansprüche 9 und 10, **dadurch gekennzeichnet, dass** die Dispersionsfarbe eine Viskosität von weniger als 24sec im DIN 4mm Becher aufweist.

12. Verfahren nach einem der Ansprüche 9 bis 11, **dadurch gekennzeichnet, dass** die erste Reinacrylat-Dispersionsfarbe zu 20 - 40 % Volumenanteil in den Dachsteinrohling eindringt.

13. Verfahren nach einem der Ansprüche 9 bis 12, **dadurch gekennzeichnet, dass** die erste Farbschicht mit einer Schichtstärke von 150 g/m² bis 300 g/m² aufgetragen wird.

## Claims

1. Roof tile made of concrete with a coating on an upper side of the roof tile, which comprises at least one first paint layer consisting of a first pure acrylate dispersion paint and at least one second paint layer consisting of a second pure acrylate dispersion paint, **characterised in that** the first paint layer is applied as a wet coating onto a roof tile blank which forms the roof tile and has not yet dried out, so that the latter partly penetrates into the roof tile blank, and the second paint layer, which is applied after drying the first paint layer by means dry coating, fully covers the first paint layer, wherein the first and the second paint layer each have a layer thickness of 20-70 µm and a pigment volume concentration of 2-38 %.

2. Roof tile with a coating according to claim 1, **characterised in that** the first and second paint layer each have a layer thickness of 30-60 µm, in particular 20-50 µm.

3. Roof tile with a coating according to any of the preceding claims, **characterised in that** the paint layers are water impermeable.

4. Roof tile with a coating according to any of the preceding claims, **characterised in that** the first and/or second paint layer comprises a first and/or second pure acrylate dispersion paint, cellulose-ether thickener and/or polyurethane thickener.

5. Roof tile with a coating according to any of the preceding claims, **characterised in that** the second paint layer has a Dirt Pick-Up value (DPU) with a residual brightness of at least 75%.

6. Roof tile with a coating according to any of the preceding claims, **characterised in that** the first pure acrylate dispersion paint of the first paint layer penetrates 20-40% into a surface of the upper side of the roof tile.

7. Roof tile with a coating according to any of the preceding claims, **characterised in that** the coating comprises a third paint layer consisting of a third pure acrylate dispersion paint.

8. Roof tile with a coating according to any of the preceding claims, **characterised in that** the compositions of the first, the second and/or the third paint layer differ from one another.

9. Method for coating a roof tile according to any of the preceding claims, comprising the following steps:
• applying a first paint layer consisting of a first pure acrylate dispersion paint as a wet coating onto the upper side of a fresh roof tile blank,
• drying the roof tile blank and the first paint layer,
• applying a second paint layer consisting of a second pure acrylate dispersion paint onto the dried first paint layer and
• drying the second paint layer.

10. Method according to claim 9, **characterised in that** the first and second dispersion paint have a PVC of 2 to 38%.

11. Method according to any of claims 9 and 10, **characterised in that** the dispersion paint has a viscosity of less than 24sec in a DIN 4 mm cup.

12. Method according to any of claims 9 to 11, **characterised in that** the first pure acrylate dispersion paint penetrates up to 20-40 % by volume into the roof tile blank.

13. Method according to any of claims 9 to 12, **characterised in that** the first paint layer is applied in a layer thickness of 150 g/m² to 300 g/m².

## Revendications

1. Tuile en béton dotée d'un revêtement sur un côté supérieur de la tuile, qui présente au moins une première couche de peinture constituée d'une première peinture de dispersion d'acrylate pur et au moins une deuxième couche de peinture constituée d'une deuxième peinture de dispersion d'acrylate pur, **caractérisée en ce que** la première couche de peinture est appliquée en tant que revêtement humide sur une ébauche de tuile non encore séchée constituant la tuile, de sorte que celui-ci ait partiellement pénétré dans l'ébauche de tuile, et la deuxième couche de peinture, laquelle est appliquée après le séchage de la première couche de peinture au moyen d'un revêtement sec recouvre complètement la première couche de peinture, dans laquelle la première et la deuxième couche de peinture présentent respectivement une épaisseur de couche de 20 à 70 µm et une concentration de pigment-volume de 2 à 38 %.

2. Tuile dotée d'un revêtement selon la revendication 1, **caractérisée en ce que** les première et deuxième couches de peinture présentent respectivement une épaisseur de couche de 30 à 60 µm, en particulier de 20 à 50 µm.

3. Tuile dotée d'un revêtement selon l'une quelconque des revendications précédentes, **caractérisée en ce que** les couches de peintures sont imperméables à l'eau.

4. Tuile dotée d'un revêtement selon l'une quelconque des revendications précédentes, **caractérisée en ce que** la première et/ou deuxième couche de peinture présente une première et/ou une deuxième peinture de dispersion d'acrylate pur, un épaississant à base d'éther de cellulose et/ou un épaississant polyuréthane.

5. Tuile dotée d'un revêtement selon l'une quelconque des revendications précédentes, **caractérisée en ce que** la deuxième couche de peinture présente une valeur de résistance à la salissure (Dirt Pick-Up, DPU) avec une luminosité résiduelle d'au moins 75 %.

6. Tuile dotée d'un revêtement selon l'une quelconque des revendications précédentes, **caractérisée en ce que** la première peinture de dispersion d'acrylate pur de la première couche de peinture pénètre de 20 à 40 % dans une surface du côté supérieur de la tuile.

7. Tuile dotée d'un revêtement selon l'une quelconque des revendications précédentes, **caractérisée en ce que** le revêtement présente une troisième couche de peinture constituée d'une troisième peinture de dispersion d'acrylate pur.

8. Tuile dotée d'un revêtement selon l'une quelconque des revendications précédentes, **caractérisée en ce que** les compositions de la première, de la deuxième et/ou de la troisième couche de peinture sont distinctes les unes des autres.

9. Procédé de revêtement d'une tuile selon l'une quelconque des revendications précédentes, comportant les étapes suivantes :
• application d'une première couche de peinture constituée d'une première peinture de dispersion d'acrylate pur sous la forme d'un revêtement humide sur le côté supérieur d'une ébauche de tuile fraîche,
• séchage de l'ébauche de tuile et de la première couche de peinture,
• application d'une deuxième couche de peinture constituée d'une deuxième peinture de dispersion d'acrylate pur sur la première couche de peinture sèche et
• séchage de la deuxième couche de peinture.

10. Procédé selon la revendication 9, **caractérisé en ce que** les première et deuxième peintures de dispersion présentent une PVK de 2 à 38 %.

11. Procédé selon l'une quelconque des revendication 9 et 10, **caractérisé en ce que** la peinture de dispersion présente une viscosité de moins de 24 sec dans un bêcher DIN de 4 mm.

12. Procédé selon l'une quelconque des revendication 9 à 11, **caractérisé en ce que** la première peinture de dispersion d'acrylate pur pénètre en une proportion volumique de 20 à 40 % dans l'ébauche de tuile.

13. Procédé selon l'une quelconque des revendication 9 à 12, **caractérisé en ce que** la première couche de peinture est appliquée en une épaisseur de couche de 150 g/m² à 300 g/m².
